# FASCICULE DE BREVET EUROPEEN

(11) **EP 0 383 648 B1**
(45) Date de publication et mention de la délivrance du brevet: **10.05.1995**
(21) Numéro de dépôt: 90400308.4
(22) Date de dépôt: 05.02.1990
(51) Int. Cl.: B01F 3/04, C02F 3/20

(54) **Dispositif de distribution et de diffusion d'un gaz dans un milieu liquide garni ou non de matériau granulaire, et bioréacteur équipé d'un tel dispositif**
Vorrichtung zur Verteilung und Diffusion eines Gases in einer Flüssigkeit, in der auch körniges Material enthalten sein kann, und mit einer solchen Vorrichtung ausgerüsteter Bioreaktor
Apparatus for distributing and diffusing gas in a liquid containing or not granular material, and bioreactor provided with such apparatus

(30) Priorité: 06.02.1989 FR 8901470
(43) Date de publication de la demande: 22.08.1990
(73) Titulaire: SOCIETE D'AMENAGEMENT URBAIN ET RURAL, F-78064 Saint Quentin Yvelines Cédex (FR)
(72) Inventeur: Riotte, Michel Bernard, F-78370 Plaisir (FR); Audoin, Léonard, F-94800 Villejuif (FR)
(74) Mandataire: Ahner, Francis

(56) Documents cités:
- DE-A- 2 502 475
- DE-U- 8 700 622
- FR-A- 2 275 248
- US-A- 3 802 676

## Description

La présente invention concerne, de façon générale, le traitement des eaux et en particulier le traitement biologique des eaux de toutes origines à l'aide de microorganismes immobilisés dans les espaces libres d'une masse poreuse.

Ce type de procédé de traitement d'épuration est analogue, dans sa conception générale à ceux appelés communément "filtres aérés biologiques" ou "lit submergé et fixe de matériau filtrant", eux-mêmes dérivés des filtres à sable ou autres matériaux de filtration utilisés couramment pour le traitement des eaux superficielles en vue de la production d'eau potable.

Le brevet français n° 2 105 006 décrit par exemple un tel type de filtre aéré biologique.

D'une manière générale, de tels traitements sont mis en oeuvre au sein d'une masse poreuse ou matériau de garnissage qui se trouve placé dans une enceinte en béton, comportant un plancher situé au-dessus du fond de l'enceinte.

Ce plancher retient le matériau tout en permettant le passage de l'eau qui va percoler au-travers.

Pour cela, il est le plus souvent équipé de buselures ou tuyères.

Dans les appareils connus, ces buselures ont aussi pour rôle de laisser passer en même temps l'eau et l'air utilisés pendant la séquence de lavage du matériau de garnissage, laquelle a pour but d'évacuer les boues en excès constituées par des matières en suspension non dégradées et la biomasse excédentaire. Pendant la séquence de lavage, l'eau et l'air sont introduits simultanément au-dessous du plancher. La présence des poutres de supportage du plancher implique la mise en place d'un réseau de distribution d'eau pour le lavage. Les buselures qui doivent permettre le passage simultané de l'air et de l'eau comportent une tige creuse munie d'un orifice latéral dont la section est prévue, à un débit d'air et un débit d'eau donnés, pour assurer un gradient de pression de l'air par rapport à l'eau suffisant pour dénoyer cet orifice tout en conservant l'extrémité de la tige dans l'eau.

Ceci nécessite une bonne étanchéité du plancher en-dehors des buselures et une parfaite maîtrise des débits respectifs de l'eau et de l'air.

Dans ce même type d'appareils connus, l'oxygène nécessaire au processus biologique, lorsque celui-ci est aérobie, est introduit sous forme d'air surpressé, désigné sous l'appellation "air de procédé", à l'aide d'un réseau de canalisations situé au-dessus du plancher.

La présente invention vise à la fois à simplifier et à améliorer de tels appareils de traitement.

A cet effet, la présente invention se rapporte à une installation comprenant, d'une part, un milieu liquide garni de matériau granulaire, d'autre part, un dispositif de diffusion et d'équirépartition d'un gaz, en particulier de l'air, comportant un réseau de canalisations situé au-dessus d'un plancher d'une enceinte de traitement et comprenant au moins un collecteur couplé à une source de gaz sous pression et communiquant avec un ensemble de tubes associés à une pluralité d'orifices de répartition de gaz.

Pareille installation est principalement destinée à équiper des bioréacteurs pour le traitement d'eaux de toutes origines par le procédé dit "filtres aérés biologiques" ou "lit granulaire immergé".

Rappelons que la diffusion et l'équirépartition du courant d'air ascendant venant au contact de l'eau à traiter au sein de la masse granulaire, sont essentielles au bon fonctionnement et au bon rendement de la réaction biologique.

Les principales installations existant jusqu'à présent font appel à un réseau de tuyauteries perforées dont les trous de répartition d'air sont au contact direct avec l'eau à traiter et le milieu granulaire.

Il en résulte de fréquents bouchages des orifices de diffusion qui perturbent ainsi le fonctionnement continu du procédé, nécessitent des arrêts fréquents de l'installation ainsi qu'un coût important de nettoyage.

Rappelons que les principaux incidents de bouchage sont dûs :
- à la carbonatation des orifices lors du contact direct de l'air et de l'eau;
- aux bavures et dépôts de matériaux présents dans les tubes perforés lors de la fabrication et du montage;
- aux produits fins présents dans le matériau granulaire qui, en cours de fonctionnement, s'agglomèrent au voisinage des orifices, et
- à la rentrée d'eau dans les tubes de répartition au moment de la phase de lavage entraînant des boues biologiques et des particules fines qui se déposent dans les trous.

L'installation objet de la présente invention a précisément pour but d'éviter tous les inconvénients précités. Dans ce but, les tuyaux de diffusion d'air ont été agencés de manière à assurer la protection du trou et une diffusion aisée de l'air en séparant les fonctions d'équirépartition et de diffusion.

L'installation objet de la présente invention se caractérise en ce que chaque tube est équipé d'une pluralité de boîtes de diffusion de gaz immergées dans le milieu liquide, chacune en regard d'un desdits orifices de répartition de gaz, et en ce que lesdites boîtes sont eues-mêmes munies d'ouvertures de diffusion de gaz sous la forme de fentes verticales situées dans des zones écartées desdits orifices de répartition d'air et dont la section est telle qu'elle interdit le passage des particules du matériau granulaire.

Grâce à l'installation selon la présente invention, les orifices de répartition d'air, généralement calibrés, se trouvent ainsi mis à sec, c'est-à-dire protégés par un matelas d'air, ce qui élimine en premier lieu tout problème d'obturation.

Il devient donc ainsi possible de supprimer, dans ce type d'installation, tous les systèmes de lavage et de détartrage qui étaient nécessaires dans la technique antérieure pour assurer le débouchage des orifices de répartition d'air.

Il convient d'ailleurs de noter ici que ces problèmes liés à des risques d'obturation, étaient d'autant plus ardus que les orifices de répartition d'air étaient situés au voisinage du fond de matériau de remplissage.

De façon générale, l'efficacité de ce type d'installation est proportionnelle au nombre de trous de répartition d'air, qui, s'ils sont présents en grand nombre, doivent présenter de faibles calibres, et sont donc d'autant plus sensibles au phénomène de colmatage.

L'invention concerne également un dispositif de distribution et de diffusion d'un gaz dans un milieu liquide, qui est d'un usage particulièrement avantageux dans une installation telle que définie précédemment. Une telle installation comporte au moins un tube (25) présentant une rangée d'ouvertures communiquant avec des orifices de répartition de gaz (26) qui débouchent dans des boîtes de diffusion de gaz (28) affectant la forme générale de cylindres d'axes perpendiculaires au tube (25), chaque boîte de diffusion de gaz (28) étant munie, sur sa surface cylindrique latérale et à l'extrémité opposée au tube (25), d'ouvertures de diffusion de gaz sous la forme de fentes (30) sensiblement parallèles à l'axe du cylindre et réparties sur la périphérie de la surface latérale de la boîte.

Grâce au dispositif de distribution et de diffusion de gaz de la présente invention, en particulier grâce à l'utilisation de fentes parallèles à l'axe des boîtes et situées à leur extrêmité, il devient possible d'augmenter à souhait le nombre d'orifices de répartition de gaz agissant à proximité immédiate du plancher de l'enceinte en minimisant les effets de colmatage avec pour conséquence une amélioration de l'efficacité de l'installation.

Dans pareil cas, l'air du procédé et l'air utilisé pour le détassage du matériau granulaire, dont le débit et la surpression sont plus élevés que pour le précédent, peuvent ainsi être introduits à la base du matériau de garnissage par le même réseau de distribution.

Ce dispositif de diffusion et d'équirépartition d'air peut alors être placé juste au-dessus d'un plancher classique qui ne doit donc plus assurer que le passage de l'eau dans les deux sens.

De cette modification, il résulte un certain nombre d'avantages déterminants :
- une simplification du plancher avec des contraintes d'étanchéité, de planéité et d'horizontalité moins strictes,
- une simplification de la réalisation des buselures ayant pour seul rôle de retenir le matériau tout en laissant passer l'eau épurée et l'eau de lavage;
- la suppression du réseau de distribution d'air de lavage sous le plancher,
- la suppression de la purge de plancher destinée à éliminer le matelas d'air après le lavage,
- une protection supplémentaire contre tout risque de colmatage des orifices de diffusion d'air, par suite de l'augmentation de débit et de pression au moment du lavage,
- la possibilité de modifier à loisir les débits respectifs d'eau et d'air pendant la phase de lavage sans risquer de déséquilibrer le système,
   * Une diminution de l'espace libre entre le fond de l'enceinte et le plancher et, par suite, une diminution de la hauteur de l'ouvrage, et
   * Une diminution de la contrainte sur le plancher par suppression de l'air sous-jacent.

Un tel dispositif permet enfin de remplacer, dans un bioréacteur, le plancher traditionnel par un double réseau de canalisations, l'un pour amener l'eau de lavage, et l'autre constitué par le dispositif de diffusion et d'équirépartition du gaz selon l'invention.

D'autres caractéristiques et avantages de l'objet de la présente invention apparaîtront à la lecture de la description détaillée faite ci-après, notamment en référence aux dessins annexés sur lesquels:
* La figure 1 représente une vue de dessus d'un bioréacteur équipé du dispositif de diffusion et d'équirépartition selon l'invention ;

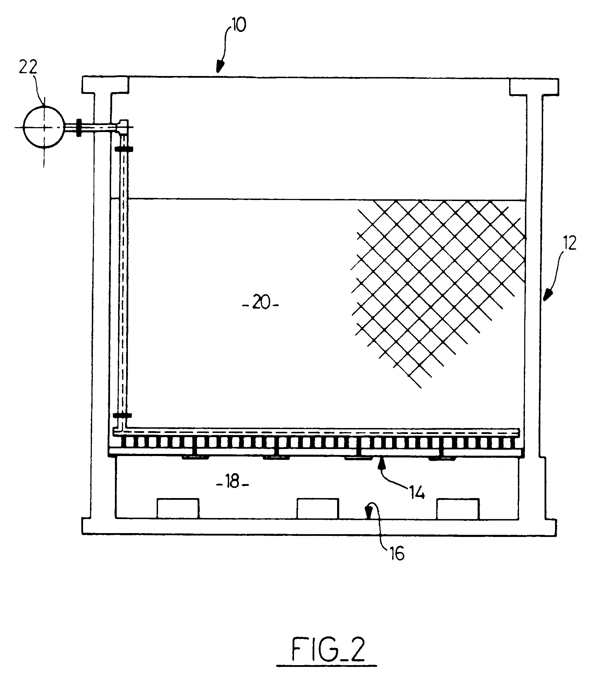

* La figure 2 représente une vue en coupe selon la ligne II-II de la figure 1 ;
* La figure 3 représente une vue à plus grande échelle du détail III de la figure 2, et
* La figure 4 représente une vue à plus grande échelle du détail IV de la figure 3.

Sur l'ensemble des figures annexées, les éléments identiques seront désignés par les mêmes références.

Le bioréacteur 10, qui est destiné au traitement biologique d'un liquide, comporte une enceinte de traitement 12 ouverte vers le haut.

Le plancher-support 14 est écarté du fond 16 de l'enceinte 12 pour délimiter une chambre collectrice 18 du liquide traité.

De façon classique, un tel bioréacteur comprend également un matériau granulaire 20 remplissant l'enceinte 12 au-dessus du planche-support 14.

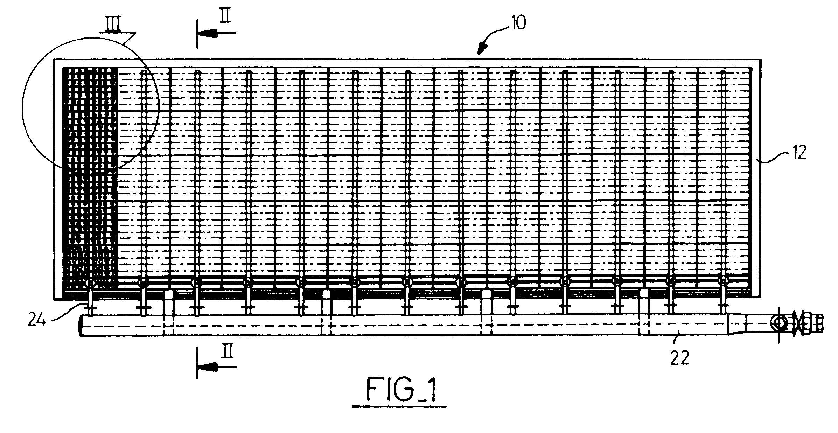

Selon une caractéristique essentielle de la présente invention, un tel bioréacteur est équippé d'un dispositif de diffusion et d'équirépartition d'air qui se trouve représenté en vue de dessus à la figure 1.

Ce dispositif comporte tout d'abord au moins un collecteur 22 couplé à une source d'air sous pression non représentée.

Ce même collecteur 22 est en outre relié à une série de tuyaux 24 sur lesquels sont branchés un ensemble de tubes 25 munis d'une pluralité d'orifices de répartition d'air 26.

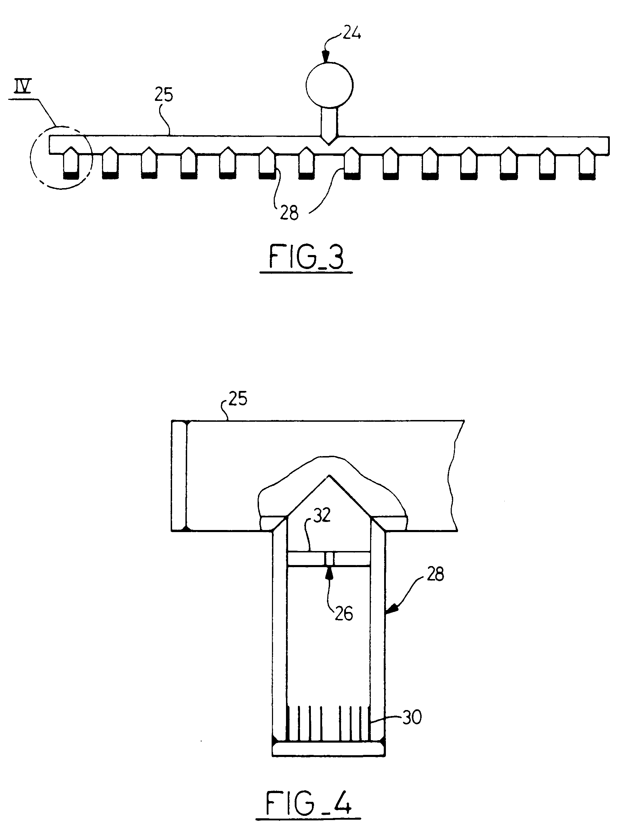

Chaque tube 25 est en outre équippé d'une pluralité de boîtes de diffusion d'air 28 disposée chacune en regard desdits orifices de répartition d'air. Tel que cela apparaît sur le détail de la figure 4, ces boîtes de diffusion d'air 28 sont elles-mêmes munies d'ouvertures de diffusion d'air 30.

Pour éviter tout risque d'obturation des ouvertures de diffusion d'air 30, leur section sera choisie de façon à interdire le passage des particules du matériau granulaire 20. Dans le cas de fentes rectangulaires, leur plus petite dimension sera donc choisie inférieure à la plus petite dimension des particules les plus fines du matériau granulaire 20.

Dans le mode de réalisation particulier décrit, les boîtes de diffusion d'air 28 sont ménagées en-dessous des tubes 25.

Dans la pratique, il s'est avéré intéressant d'utiliser des boîtes de diffusion d'air 28 affectant la forme générale de cylindres d'axe vertical.

Un tel dispositif peut être posé à même le plancher du bioréacteur.

Pareil dispositif, qui peut en particulier être réalisé en matière thermoplastique, présente une élasticité suffisante pour rattrapper les éventuels défauts de planéité du plancher du bioréacteur.

La partie supérieure de chaque boîte de diffusion d'air 28, qui est située au voisinage de la jonction avec le tube 25 correspondant, comporte un orifice calibré de répartition d'air 26 assurant, par sa section précise, la perte de charge nécessaire à la bonne répartition de l'air injecté dans l'ensemble du matériau granulaire.

La partie supérieure de la boîte de diffusion d'air 28 peut par exemple comporter une pastille amovible 32 au centre de laquelle se trouve ménagé l'orifice calibré de répartition d'air 26.

Pour éviter tout phénomène d'accumulation d'eau lorsque l'installation est au repos, une telle pastille 32 peut avantageusement affecter la forme générale d'un cône ayant son sommet dirige vers le bas.

Selon un mode de réalisation particulièrement avantageux, l'ensemble des tubes 25 sera équipé d'une pluralité de buselures filetées de raccordement, sur lesquelles viendront se visser les boîtes de diffusion d'air 28.

Dans pareil mode de réalisation, les pastilles amovibles équipées de l'orifice calibré 26 pourront par exemple être bloquées en position entre le bord libre des tubulures filetées de raccordement et un épaulement correspondant ménagé dans la boîte de diffusion d'air 28.

Chaque boîte de diffusion d'air 28 comporte une partie médiane définissant en permanence une chambre d'air ménagée entre l'orifice de répartition d'air 26 et l'eau à traiter.

Enfin, les boîtes de diffusion 28 comportent, à leur partie inférieure, des orifices de répartition 30 ménagés sur la surface latérale de ladite boîte 28.

On remarquera que le mode de réalisation particulier décrit à la figure 4 vise une boîte de diffusion d'air 28 fermée à sa partie inférieure.

Dans le cas particulier où le dispositif de diffusion et d'équirépartition repose à même le plancher du bioréacteur, il serait possible de faire appel à des boîtes de diffusion d'air ne comportant pas de face inférieure.

Dans le mode de réalisation particulier décrit à la figure 4, la boîte de diffusion d'air 28 comporte une pluralité de fentes verticales 30 présentant la même hauteur.

Il est cependant également possible de faire appel à une répartition différente des hauteurs de fentes 30.

Ainsi, dans un dispositif dont différentes boîtes de diffusion comportent des fentes verticales de hauteurs différentes, à faible débit, seules les fentes les plus longues vont assurer un débit d'air.

En choisissant une répartition appropriée de ces boîtes de diffusion d'air 28 équipées des fentes les plus longues, il devient possible d'obtenir une répartition réguliére sur des gammes de dêbit différent.

De façon générale, pour obtenir une bonne équirépartition du débit, les orifices de répartition d'air 30 seront avantageusement distribués à la périphérie des boîtes de diffusion 28 avec un décalage angulaire constant.

Il est cependant également possible, dans certains cas particuliers, d'avoir recours à des boîtes de diffusion 28 comportant leurs ouvertures de diffusion d'air 30 sur une partie seulement de la surface latérale de la boîte ou encore avec une répartition périphérique inégale.

Ceci permet d'assurer une orientation préférentielle de la diffusion d'air au sein du milieu granulaire.

Une telle orientation préférentielle de la diffusion d'air peut par exemple présenter un intérêt au voisinage de parois ou de collecteurs responsables d'une perturbation de la diffusion d'air.

On précisera enfin que le rapport de la section libre totale des orifices de diffusion d'air 30 de chaque boîte 28, à la section du trou de répartition d'air 26 correspondant, doit être avantageusement compris entre 10 et 100.

Dans la pratique, pareil dispositif a permis de supprimer tout phénomène de bouchage intempestif des orifices de diffusion d'air.

On a pu en outre observer l'apparition d'une parfaite répartition du flux d'air, en adoptant des ouvertures d'orifices de répartition d'air très faibles, par exemple de l'ordre de grandeur du millimètre.

Enfin, le dispositif permet d'obtenir une parfaite équirépartition qui se trouve assurée même dans le cas de débits d'air variables.

## Revendications

1. Installation comprenant dans une enceinte de traitement (12) :
- d'une part, un milieu liquide garni de matériau granulaire (20),
- d'autre part, un dispositif de distribution et de diffusion d'un gaz, en particulier d'air, comportant un réseau de canalisations situé au-dessus d'un plancher (14) de l'enceinte de traitement (12) et comprenant au moins un collecteur (22) couplé à une source de gaz sous pression et communiquant avec un ensemble de tubes (25) associés à une pluralité d'orifices de répartition de gaz (26),
caractérisée en ce que chaque tube (25) est équipé d'une pluralité de boîtes de diffusion de gaz (28) immergées dans le milieu liquide, chaque boîte étant en regard d'un des orifices de répartition de gaz (26) et étant munie d'ouvertures de' diffusion de gaz sous la forme de fentes (30) verticales situées dans des zones écartées desdits orifices de répartition de gaz (26) et dont la section est telle qu'elle interdit le passage des particules du matériau granulaire (20).

2. Installation selon la revendication 1, caractérisée en ce que les ouvertures de diffusion de gaz (30) sont rectangulaires et en ce que leur plus petite dimension est inférieure à la plus petite dimension des particules les plus fines du matériau granulaire.

3. Installation selon l'une des revendications 1 et 2, caractérisée en ce que les boîtes de diffusion de gaz (28) sont ménagées en-dessous desdits tubes (25).

4. Installation selon la revendication 3, caractérisée en ce que lesdites boîtes de diffusion de gaz (28) affectent la forme générale de cylindres d'axe vertical.

5. Installation selon la revendication 4, caractérisée en ce que la partie supérieure de chaque boîte de diffusion de gaz (28), située au voisinnage de la jonction avec le tube (25) correspondant, comporte un orifice calibré de répartition de gaz (26).

6. Installation selon la revendication 5, caractérisée en ce que la partie supérieure de la boîte de diffusion (28) comporte une pastille amovible (32) au centre de laquelle se trouve ménagé l'orifice calibré de répartition de gaz (26).

7. Installation selon la revendication 6, caractérisée en ce que ladite pastille (32) affecte la forme générale d'un cône ayant son sommet dirigé vers le fond de la boîte de diffusion de gaz (28).

8. Installation selon l'une des revendications 4 à 7, caractérisée en ce que chaque boîte de diffusion de gaz (28) comporte une partie médiane définissant en permanence une chambre de gaz ménagée entre l'orifice de répartition de gaz et l'eau à traiter.

9. Installation selon l'une des revendications 4 à 8, caractérisée en ce que les orifices de répartition de gaz (30) sont ménagées à la partie inférieure de la surface latérale de chaque boîte (28).

10. Installation selon l'une des revendications 1 à 9, caractérisée en ce que chaque boîte de diffusion de gaz (28) comporte une pluralité de fentes verticales (30) de même hauteur.

11. Installation selon la revendication 10, caractérisée en ce que différentes boîtes de diffusion de gaz (28) comportent des fentes verticales (30) de hauteurs différentes.

12. Installation selon l'une des revendications 1 à 11, caractérisée en ce que les orifices de répartition de gaz (30) sont distribués à la périphérie des boîtes de diffusion (28) avec un décalage angulaire constant.

13. Installation selon l'une des revendications 1 à 12, caractérisée en ce que les boîtes de diffusion (28) comportent leurs ouvertures de diffusion de gaz (30) sur une partie seulement de leur surface latérale, ou avec une répartition périphérique inégale, en vue d'assurer une orientation préférentielle de la diffusion d'air au sein du milieu granulaire.

14. Installation selon l'une des revendications 1 à 13, caractérisée en ce que le rapport de la section libre totale des orifices de diffusion (30) de chaque boîte de diffusion (28) à la section du trou de répartition (26) correspondant, est compris entre 10 et 100.

15. Installation selon l'une des revendications 1 à 14, caractérisée en ce que l'ensemble des tubes (25) se trouve équipé de tubulures filetées de raccordement sur lesquelles viennent se visser les boîtes de diffusion de gaz (28), avec interposition d'une pastille présentant l'orifice de répartition de gaz.

16. Installation selon l'une des revendications 1 à 15, caractérisée en ce que le plancher (14) est écarté du fond (16) de l'enceinte (12) pour délimiter une chambre collectrice (18) du liquide traité, et en ce que le liquide garni de matériau granulaire (20) remplit ladite enceinte au-dessus du plancher (14).

17. Installation selon la revendication 16, caractérisée en ce que les boîtes de diffusion (28) sont disposées à proximité immédiate du plancher (14).

18. Installation selon la revendication 17, caractérisée en ce que la surface inférieure des boites de diffusion (28) repose sur le plancher (14).

19. Utilisation d'une installation selon les revendications 1 à 17, en vue d'un traitement biologique, caractérisée en ce que le dispositif de distribution et de diffusion est utilisé pour amener aussi bien de l'air nécessaire à la mise en oeuvre du traitement d'épuration, que de l'air de détassage du matériau granulaire.

20. Dispositif de distribution et de diffusion d'un gaz dans un milieu liquide, comportant au moins un tube (25) présentant une rangée d'ouvertures communiquant avec des orifices de répartition de gaz (26) qui débouchent dans des boîtes de diffusion de gaz (28) affectant la forme générale de cylindres d'axes perpendiculaires au tube (25), chaque boîte de diffusion de gaz (28) étant munie, sur sa surface cylindrique latérale et à l'extrémité opposée au tube (25), d'ouvertures de diffusion de gaz sous la forme de fentes (30) sensiblement parallèles à l'axe du cylindre et réparties sur la périphérie de la surface latérale de la boîte.

## Claims

1. An installation comprising in a treatment vessel (12):
firstly a liquid medium lined with granular material (20), and
secondly apparatus for delivering and diffusing a gas, in particular air, including a network of channels situated above a floor (14) of the treatment vessel (12) and comprising at least one manifold (22) coupled to a source of gas under pressure and communicating with a set of tubes (25) associated with a plurality of gas-distribution orifices (26),
the installation being characterized in that each tube (25) is fitted with a plurality of gas diffusion boxes (28) immersed in the liquid medium, each box being over one of the gas-distribution orifices (26), and being provided with gas diffusion openings in the form of vertical slits (30) situated in zones that are distant from said gas-distribution orifices (26) and whose section is such that it prevents particles of the granular material from passing therethrough.

2. An installation according to claim 1, characterized in that the gas diffusion openings (30) are rectangular and in that their smallest dimension is smaller than the smallest dimension of the finest particles in the granular material.

3. An installation according to claim 1 or 2, characterized in that the gas diffusion boxes (28) are provided beneath said tubes (25).

4. An installation according to claim 3, characterized in that the said gas diffusion boxes (28) are generally in the form of vertical-axis cylinders.

5. An installation according to claim 4, characterized in that the top portion of each air diffusion box (28) situated in the vicinity of its junction with the corresponding tube (25) includes a calibrated gas-distribution orifice (26).

6. An installation according to claim 5, characterized in that the top portion of each air diffusion box (28) includes a removable plug (32) having the calibrated gas-distribution orifice (26) provided in the center thereof.

7. An installation according to claim 6, characterized in that said plug (32) is generally in the form of a cone having its point pointing towards the bottom of the gas diffusion box (28).

8. An installation according to any one of claims 4 to 7, characterized in that each gas diffusion box (28) includes a middle portion that defines a permanent gas chamber formed between the gas-distribution orifice and the water to be treated.

9. An installation according to any one of claims 4 to 8, characterized in that the air diffusion openings (30) are formed in the bottom portion of the side wall of each box (28).

10. An installation according to any one of claims 1 to 9, characterized in that each gas diffusion box (28) includes a plurality of same-height vertical slits (30).

11. An installation according to claim 10, characterized in that different gas diffusion boxes (28) have vertical slits (30) of different heights.

12. An installation according to any one of claims 1 to 11, characterized in that the gas diffusion openings (30) are distributed around the peripheries of the diffusion boxes (28) at a constant angular pitch.

13. An installation according to any one of claims 1 to 12, characterized in that the diffusion boxes (28) have their gas diffusion openings (30) extending over a portion only of their side surfaces, being unequally distributed around the peripheries thereof, thereby establishing a preferred direction of air diffusion within the granular medium.

14. An installation according to any one of claims 1 to 13, characterized in that the ratio of the total free section of the diffusion orifices (30) of each diffusion box (28) over the section of the corresponding distribution holes (26) lies in the range 10 to 100.

15. An installation according to any one of claims 1 to 14, characterized in that the set of tubes (25) is fitted with threaded bushings on which the air diffusion boxes (28) are screwed, with respective plugs being interposed therebetween, each of said plugs having an gas-distribution orifice.

16. An installation according to any one of claims 1 to 15, characterized in that the floor (14) is offset from the bottom (16) of the vessel (12) to delimit a chamber (18) for collecting treated liquid, and in that the liquid lined with granular material (20) refills said vessel above the floor (14).

17. An installation according to claim 16, characterized in that the diffusion boxes (28) are disposed in the immediate proximity of the floor (14).

18. An installation according to claim 17, characterized in that the bottom surfaces of the diffusion boxes (28) rest on the floor (14).

19. The use of an installation according to claims 1 to 17, for the purpose of biological treatment, characterized in that the diffusion and distribution apparatus is used both for conveying the air required for performing purification treatment and the air required for loosening the granular material.

20. Apparatus for delivering and diffusing a gas in a liquid medium, including at least one tube (25) having a row of openings communicating with the gas-distribution orifices (26) which open out into the gas diffusion boxes (28) that are generally in the form of cylinders about axes perpendicular to the tube (25), each gas diffusion box (28) being provided on its side cylindrical wall and at the end opposite to the tube (25) with gas diffusion openings in the form of slits (30) substantially parallel to the axis of the cylinder and distributed on the periphery of the side wall of the box.

## Patentansprüche

1. Vorrichtung, welche in einem Aufbereitungsbereich (12) folgendes enthält:
- einerseits ein ein körniges Material (20) enthaltendes flüssiges Medium,
- andererseits eine Vorrichtung für die Verteilung und Diffusion eines Gases, insbesondere von Luft, welche ein Netz von Rohrleitungen aufweist, das oberhalb, eines Bodens (14) des Aufbereitungsbereiches (12) angeordnet ist, und die mindestens einen Kollektor (22) aufweist, welcher an eine Quelle für Druckgas angeschlossen ist und mit einem Rohrzusammenbau (25) kommuniziert, welcher mit einer Vielzahl von Verteilerbohrungen (26) für Gas kommuniziert,
**dadurch gekennzeichnet**, **daß**
jede Rohrleitung (25) mit einer Vielzahl von Verteilerkästen (28) für Gas ausgestattet ist, die in das flüssige Medium eingetaucht sind, wobei jeder dieser Kästen gegenüber den Verteilerbohrungen (26) für Gas angordnet und mit Verteilerbohrungen für Gas in Form von senkrechten Schlitzen (30) ausgerüstet ist, die in entfernten Bereichen dieser Verteilerbohrungen (26) positioniert sind und deren Querschnitt so ausgelegt ist, daß er den Durchtritt der Partikel des körnigen Materials (20) unterbindet.

2. Vorrichtung nach Anspruch 1,
**dadurch gekennzeichnet, daß**
die Verteilerbohrungen für Gas (30) rechteckig sind und daß ihre kleinste Abmessung unter der kleinsten Abmessung der feinsten Partikel des körnigen Materials (20) liegt.

3. Vorrichtung nach einem der Ansprüche 1 oder 2,
**dadurch gekennzeichnet, daß**
die Verteilerkästen für Gas (28) unter diesen Rohrleitungen (25) angeordnet sind.

4. Vorrichtung nach Anspruch 3,
**dadurch gekennzeichnet, daß**
die Verteilerkästen für Gas (28) die allgemeine Form eines Zylinders mit senkrechter Achse haben.

5. Vorrichtung nach Anspruch 4,
**dadurch gekennzeichnet, daß**
der obere Teil der einzelnen Verteilerkästen für Gas (28), welcher in der Nähe der Verbindung mit der entsprechenden Rohrleitung (25) positioniert ist, eine, kalibrierte Verteilerbohrung (26) für Gas aufweist.

6. Vorrichtung nach Anspruch 5,
**dadurch gekennzeichnet, daß**
der obere Teil des Verteilerkastens (28) eine lösliche Anschlußfläche (32) aufweist, in deren Mittelpunkt die kalibrierte Verteilerbohrung (26) für Gas eingebracht ist.

7. Vorrichtung nach Anspruch 6,
**dadurch gekennzeichnet, daß**
diese Anschlußfläche (32) die allgemeine Form eines Konus hat, dessen Spitze gegen den Bodentteil des Verteilerkastens (28) für Gas ausgerichtet ist.

8. Vorrichtung nach einem der Ansprüche 4 bis 7,
**dadurch gekennzeichnet, daß**
jeder der Verteilerkästen (28) einen mittleren Teil aufweist, welcher permanent eine Gaskammer bildet, welche zwischen der Verteilerbohrung für Gas und dem aufzubereitenden Wasser angeordnet ist.

9. Vorrichtung nach einem der Ansprüche 4 bis 8,
**dadurch gekennzeichnet, daß**
die Verteilerbohrungen (30) für Gas in den unteren Teil der Seitenflächen der Verteilerkästen (28) eingebracht sind.

10. Vorrichtung nach einem der Ansprüche 1 bis 9,
**dadurch gekennzeichnet, daß**
jeder der Verteilerkästen (28) eine Vielzahl von senkrechten Schlitzen (30) gleicher Höhe aufweist.

11. Vorrichtung nach Anspruch 10,
**dadurch gekennzeichnet, daß**
verschiedene Verteilerkästen (28) für Gas vertikale Schlitze (30) unterschiedlicher Höhen aufweisen.

12. Vorrichtung nach einem der Ansprüche 1 bis 11,
**dadurch gekennzeichnet, daß**
die Verteilerbohrungen (30) für Gas mit einem konstanten Winkelabstand über den Umfang der Verteilerkästen (28) angeordnet sind.

13. Vorrichtung nach einem der Ansprüche 1 bis 12,
**dadurch gekennzeichnet, daß**
die Verteilerkästen (28) die Verteilerbohrungen (30) für Gas nur auf einem Teil ihrer Seitenfläche enthalten, oder aber mit einer ungleichen Umfangsverteilung, um so eine bevorzugte Ausrichtung der Verteilung von Luft in dem körnigen Medium zu erreichen.

14. Vorrichtung nach einem der Ansprüche 1 bis 13,
**dadurch gekennzeichnet, daß**
das Verhältnis zwischen dem freien Gesamtquerschnitt der Verteilerbohrungen (30) der einzelnen Verteilerkästen (28) und dem Querschnitt der entsprechenden Verteilerbohrung (26) zwischen 10 und 100 liegt.

15. Vorrichtung nach einem der Ansprüche 1 bis 14,
**dadurch gekennzeichnet, daß**
der Gesamtumfang der Rohrleitungen (25) mit Gewindeanschlüssen ausgestattet ist, auf die die Verteilerkästen (28) für Gas aufgeschraubt werden, wobei eine Anschlußplatte zwischengeschaltet ist, welche die Verteilerbohrung für Gas darstellt.

16. Vorrichtung nach einem der Ansprüche 1 bis 15,
**dadurch gekennzeichnet, daß**
der Unterteil (14) von dem Bodenteil (16) des Bearbeitungsbereiches (12) getrennt ist, um eine Sammelkammer (18) für die behandelte Flüssigkeit zu bilden, und dadurch, daß die das körnige Material (20) enthaltende Flüssigkeit diesen Behandlungsbereich oberhalb des Bodenteils (14) ausfüllt.

17. Vorrichtung nach Anspruch 16,
**dadurch gekennzeichnet, daß**
die Verteilerkästen (28) in unmittelbarer Nähe des Bodenteils (14) angeordnet sind.

18. Vorrichtung nach Anspruch 17,
**dadurch gekennzeichnet, daß**
die untere Fläche der Verteilerkästen (20) auf dem Bodenteil (14) aufliegt.

19. Vorrichtung nach einem der Ansprüche 1 bis 17,
**dadurch gekennzeichnet, daß**
im Hinblick auf eine biologische Aufbereitung, welche dadurch gekennzeichnet ist, daß die Vorrichtung für die Verteilung und Verbreitung dazu verwendet wird, um sowohl die notwendige Luft für die Reinigungsbehandlung, als auch die notwendige Luft für das Absetzen des körnigen Materials bereitzustellen.

20. Vorrichtung für die Verteilung, und die Ausbreitung eines Gases in einem flüssigen Medium, welche mindestens eine Rohrleitung (25) aufweist, die eine Reihe von Bohrungen enthält, welche mit den Verteilungsbohrungen (26) für Gas kommunizieren, die in die Verteilerkästen (28) für Gas münden, und welche die allgemeine Gestalt von Zylindern mit senkrechten Achsen zu der Rohrleitung (25) haben, wobei jeder Verteilerkasten (28) für Gas auf seiner seitlichen zylindrischen Fläche und an der entgegengesezten Seite der Rohrleitung (25) mit Verteilerbohrungen für Gas in Form von Schlitzen ausgestattet ist, welche weitgehend parallel zu der Achse des Zylinders verlaufen und über den Umfang der Seitenfläche des Kastens verteilt sind.
